# FASCICULE DE BREVET EUROPEEN

(11) **EP 0 394 093 B1**
(45) Date de publication et mention de la délivrance du brevet: **08.06.1994**
(21) Numéro de dépôt: 90400971.9
(22) Date de dépôt: 10.04.1990
(51) Int. Cl.: H01G 13/00

(54) **Bande de connexion pour anodes de condensateurs électrolytiques, et procédé de fabrication de condensateurs électrolytiques utilisant une telle bande**
Verbindungsband für Anoden von elektrolytischen Kondensatoren sowie Verfahren zur Herstellung von elektrolytischen Kondensatoren unter Verwendung dieses Bandes
Connection band for anodes of electrolytic capacitors and process for making electrolytic capacitors using the same

(30) Priorité: 21.04.1989 FR 8905318
(43) Date de publication de la demande: 24.10.1990
(73) Titulaire: COMPAGNIE EUROPEENNE DE COMPOSANTS ELECTRONIQUES LCC, F-92400 Courbevoie (FR)
(72) Inventeur: Delalande, François, Thomson-CSF, F-92045 Paris la défense (FR); Boulloy, Georges, Thomson-CSF, F-92045 Paris la défense (FR)
(74) Mandataire: Ruellan-Lemonnier, Brigitte

(56) Documents cités:
- FR-A- 1 264 816
- FR-A- 2 303 395
- GB-A- 2 121 604

## Description

La présente invention concerne la fabrication de condensateurs électrolytiques et, en particulier, la fabrication de condensateurs se présentant sous forme de chips pour le montage en surface.

Les problèmes rencontrés à l'heure actuelle au cours de la fabrication de condensateurs électrolytiques sont de plusieurs types.

Il est nécessaire de développer une surface apparente importante sur l'anode pour avoir une grande capacité volumique.

L'opération d'imprégnation par un électrolyte doit être compatible avec la technologie employée, la tension de service recherchée, la catégorie climatique envisagée pour les composants.

Pour les condensateurs de type CMS (composants pour le montage en surface) en particulier, on cherche a obtenir la capacité volumique la plus élevée possible et donc à réduire les parties inactives du produit terminé. L'imprégnation se faisant sur la partie oxydée de l'anode mais ne devant pas déborder sur la partie non oxydée reliée électriquement à la connexion d'anode, on cherche à réduire la longueur de la partie oxydée de l'anode qui n'est pas imprégnée et qui est donc inactive d'un point de vue capacitif. Cependant, cette possibilité de réduction a ses limites en raison des courts-circuits qui peuvent survenir à ce niveau. Les tolérances existant sur les niveaux d'oxydation et d'imprégnation font qu'il faut se garder une certaine marge de sécurité. Ce point est capital et difficile à résoudre sans que ce soit au détriment du volume total du condensateur. Que ce soit pour les condensateurs à l'aluminium ou pour ceux au tantale, le volume inactif minimum permettant d'assurer correctement l'isolation entre l'électrolyte et la partie d'anode non oxydée représente actuellement une grandeur comprise entre le quart et la moitié du volume total du produit terminé selon les formats. Ceci a pour effet de limiter la miniaturisation des composants ou, ce qui revient au même, de diminuer la gamme de capacité réalisable dans un volume donné.

Dans tous les procédés de fabrication connus à ce jour, l'anode complète des condensateurs est traitée en oxydation isolante pour arriver à un élément prêt à être imprégné et habillé en vue de son utilisation. Pour cela, cet élément doit être reporté sur des connexions définitives (fil ou lead-frame) d'utilisation, côté anode et cathode, pour permettre la soudure ou son report sur un circuit imprimé.

Afin de pallier ces problèmes d'isolation électrique tout en augmentant la capacité volumique des condensateurs électrolytiques, l'invention a pour objet une bande de connexion pour anodes de condensateurs électrolytiques de type CMS ainsi qu'un procédé de fabrication permettant de supprimer une opération classique de fabrication qui consiste à reporter une connexion d'anode terminale sur le produit, en même temps que d'éliminer la dégradation d'isolement voire le court-circuit pouvant résulter de cette opération.

L'invention a donc pour objet une bande de connexion pour anodes de condensateurs électrolytiques de type CMS, ladite bande comportant des languettes pour connecter les anodes, chaque languette étant pourvue d'une première zone réalisée dans le même métal que les anodes et destinées à être connectées à l'anode, et une seconde zone présentant une bonne soudabilité.

L'invention a également pour objet un procédé de fabrication de condensateurs électrolytiques à partir d'anodes réalisées en un métal anodisable, ledit procédé comprennant les étapes suivantes :
- soudure des anodes sur une bande de connexion comportant des languettes en des zones des languettes constituées par un métal identique à celui des anodes.
- formation (oxydation) des anodes,
- imprégnation des anodes oxydées,
- mise en place des cathodes,
- exécution des opérations de finition des condensateurs, comprenant entre autres la réalisation d'électrodes d'anodes à partir de zones des languettes constituées par un métal présentant une bonne soudabilité.

L'invention sera mieux comprise, et d'autres avantages apparaîtront, à la lecture de la description qui va suivre, donnée à titre d'exemple non limitatif, accompagnée des dessins annexés parmi lesquels :
- la figure 1 représente une anode pour condensateur électrolytique en cours de traitement selon un procédé de réalisation de l'art connu,
- la figure 2 représente, selon l'art connu, l'opération de report du composant semi-fini sur sa connexion définitive,
- la figure 3 représente une bande de transport ou de connexion selon l'invention,
- la figure 4 illustre l'utilisation d'une bande de transport selon l'invention pour la fabrication de condensateurs électrolytiques.

La présente invention peut s'appliquer aussi bien aux condensateurs à l'aluminium, qu'à ceux formés à partir d'autres métaux utilisables pour obtenir des condensateurs électrolytiques (tantale, niobium, ...). Ces métaux, susceptibles de développer par oxydation une couche d'oxyde isolante d'épaisseur relativement importante, seront qualifiés d'anodisables dans le reste de la description.

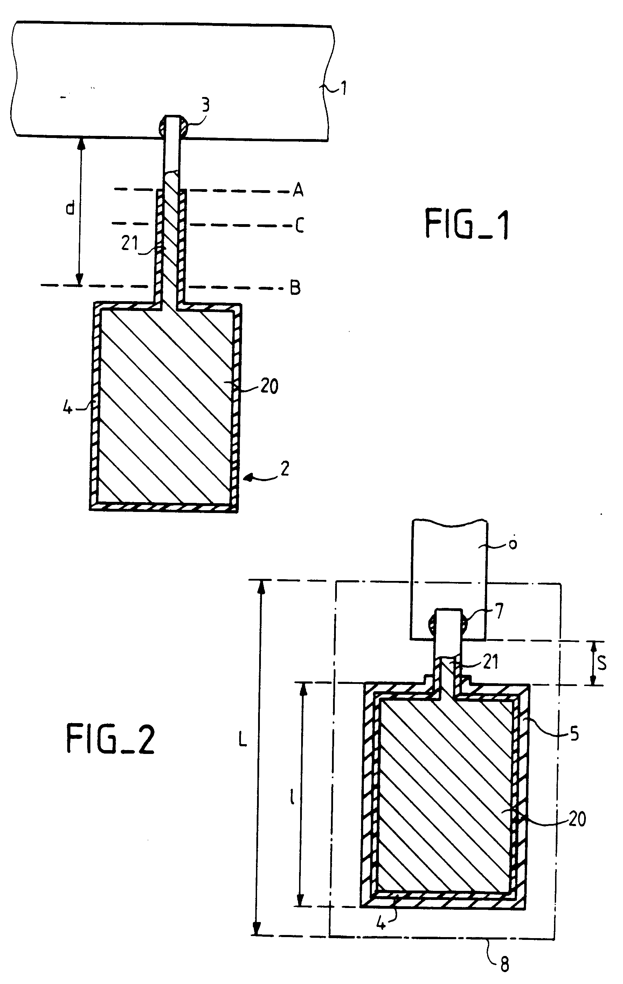

La figure 1 représente une anode pour condensateur électrolytique en cours de traitement et selon un procédé de réalisation de l'art connu. Sur cette figure on reconnaît une bande métallique 1 ne pouvant pas être oxydée. Habituellement, c'est une bande en inox. Sur cette bande de transport sont soudées des anodes pour condensateurs électrolytiques. Une seule anode 2 a été représentée sur la figure 1. Elle est constituée d'un bloc ou d'une masse 20 et d'un bras de liaison 21. L'anode est rattachée, par l'intermédiaire de son bras de liaison 21, à la bande de transport 1 grâce à une soudure 3. Ainsi, grâce à la bande de transport, les anodes seront traitées collectivement pour subir les opérations d'oxydation et d'imprégnation. Sur la figure 1, l'anode a déjà subi l'opération d'oxydation et une couche d'oxyde 4 s'est formée sur le bloc 20 et sur une partie du bras 21. On dispose ainsi d'une cote d'oxydation A.

Après l'opération d'oxydation vient l'opération d'imprégnation. Comme il a déjà été dit plus haut, l'électrolyte ne doit pas venir en contact avec le métal de l'anode. Ceci impose une cote limite B compte tenu des tolérances à observer et pour éviter les courts-circuits lors des opérations électrochimiques de fabrication. La distance d séparant la limite supérieure de l'électrolyte et le bas de la bande 1 est typiquement de 10 mm.

Entre les cotes A et B, on coupe le bras 21 pour pouvoir effectuer le report du semi-fini obtenu. Ceci impose la cote de découpe C.

La figure 2 représente, selon l'art connu, l'opération de report du composant semi-fini sur sa connexion définitive. On reconnaît l'anode 2 formée du bloc 20 et du bras 21 recouverts de la couche d'oxyde 4. L'opération d'imprégnation a apporté l'électrolyte 5. Le bras 21, coupé précédemment à la cote C, est soudé sur la connexion 6. La soudure 7 a été effectuée après destruction locale de la couche d'oxyde. La ligne 8 tracée en trait mixte figure les dimensions du composant final obtenu après surmoulage. La connexion est généralement en cupro-nickel étamé pour des anodes en aluminium et en alliage à forte teneur en nickel et étamé pour des anodes en tantale.

Pour un tel condensateur selon l'art connu, la longueur active est 1 rapportée à la longueur totale L du composant. La distance S représente la zone de sécurité d'isolement et doit avoir une valeur minimum afin d'éviter les courts-circuits entre la soudure 7 et l'électrolyte 5.

Toutes les opérations étant faites automatiquement et les condensateurs étant traités de manière collective, on comprend que la succession des cotes à respecter fait que la distance S représente une part relativement importante de volume inactif.

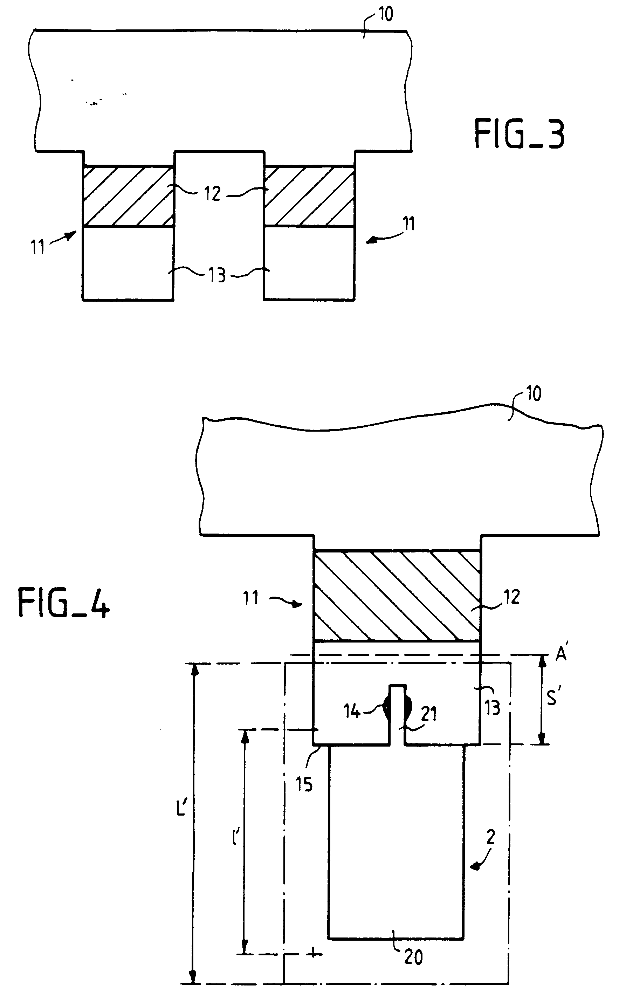

La figure 3 représente une bande de transport selon l'invention. La bande de transport 10, que l'on peut également appeler bande de connexion, est pourvue à intervalles réguliers de languettes latérales 11. Chaque languette 11 présente deux zones de nature différente : une zone 13 dans le même métal anodisable que celui des anodes à traiter et une zone 12 en un métal (ou association de métaux) offrant une bonne soudabilité. Par bonne soudabilité, on entend la possibilité de réunir de manière définitive le métal des zones 12 à des connexions ou à des électrodes d'autres composants ou encore à des pistes de circuits imprimés, ceci de manière classique et habituelle (soudure à la vague, au fer à souder ou à la machine à souder utilisés couramment en électronique).

La bande de transport ou de connexlon 10 peut être réalisée de différentes façons. On peut partir d'une bande de métal anodisable du même métal que les anodes à traiter et réaliser, par exemple par emboutissage, les languettes 11. On peut ensuite déposer sur les zones 12 le métal offrant une bonne soudabilité. Ce métal pourrait éventuellement être déposé sur la bande 10 avant de procéder à la découpe en languettes. Les languettes peuvent aussi être prévues de chaque côté, de la bande de connexion.

A titre d'exemple non limitatif, si la bande 10 est en aluminium, on peut cuivrer les zones 12 des languettes en bain électrolytique après élimination de la couche d'oxyde d'aluminium sur ces zones (par brossage ou action d'un produit chimique). L'avantage de ce procédé est de pouvoir être mis en oeuvre en continu. Les zones cuivrées peuvent alors être étamées ou argentées pour améliorer encore la soudabilité.

Il est possible aussi de partir d'une bande en un métal qui ne soit pas anodisable, tel que l'acier, de recouvrir les zones 13 d'un métal anodisable (par exemple l'aluminium) et de recouvrir les zones 12 d'un métal (ou d'une succession de couches métalliques) présentant une bonne soudabilité.

Une autre solution pourrait consister à partir d'une bande en métal présentant une bonne soudabilité et à recouvrir les zones 13 par un dépôt de métal anodisable.

La figure 4 illustre l'utilisation d'une bande de transport selon l'invention pour la fabrication de condensateurs électrolytiques. Le bras 21 de l'anode 2 a été fixé à la zone 13 de la languette 11 par une soudure 14. La zone 13 et l'anode 2 étant en un même métal anodisable, l'oxydation qui interviendra au cours de l'opération suivante créera l'isolement nécessaire pour l'imprégnation. Il y a alors tout intérêt, pour des raisons de miniaturisation, à placer l'anode 2 contre le bord 15 de la languette 11. La cote A' représentant la limite de l'oxydation, la distance S′, représentant la zone de sécurité d'isolement, peut être plus grande que par le procédé de fabrication selon l'art connu.

L'opération de report après traitement des anodes (oxydation et imprégnation) se trouve donc supprimée et par la même occasion les risques de court-circuit ou de dégradation de l'oxyde constituant le diélectrique.

Pour ce condensateur élaboré selon l'invention, la longueur active sera l′ rapportée à la longueur totale L' du composant, après les opérations d'oxydation et d'imprégnation dont les résultats ne sont pas visibles sur la figure 4. Le rapport des longueurs l′/L′ est supérieur, dans le cas de la figure 4, au rapport l/L des longueurs relevées à la figure 2. Il en résulte une plus grande capacité volumique pour le condensateur élaboré par le procédé selon l'invention.

Un autre avantage de l'invention est constitué par le fait que l'anode peut être mis en contact avec le bord de la languette ce qui permet d'assurer un bon positionnement de l'anode par rapport à la bande de transport. On peut d'ailleurs, pour améliorer encore ce positionnement, découper et/ou replier le bout de la languette à 90°. Cette variante présente un intérêt certain lorsque l'anode est formée d'un simple bloc, sans bras de liaison. La soudure du bloc anode sur la languette peut alors se faire grâce aux pattes à l'extrémité de la languette, repliées à 90° par rapport au reste de la languette.

La bande de transport et de connexion selon l'invention présente l'avantage de pouvoir être intégrée au bloc d'anode. Dans ce cas, les anodes peuvent être réalisées par frittage ou schoopage directement sur les zones 13 de métal anodisable.

Après l'opération d'imprégnation, les cathodes, prolongées par leurs connexions, seront mises en place selon des techniques de l'art connu. Les éléments capacitifs obtenus seront enrobés par exemple. Les languettes 11 seront alors détachées du reste de la bande 10 par découpe et, si on désire obtenir des condensateurs chips, les zones 12 seront rabattues sur l'enrobage pour servir de connexions d'anode. De même les connexions de cathode seront rabattues sur l'enrobage du composant.

## Revendications

1. Bande de connexion (10) pour anodes (2) de condensateurs électrolytiques de type CMS, ladite bande comportant des languettes (11) pour connecter les anodes, caractérisée en ce que chaque languette est pourvue d'une première zone (13) réalisée dans un métal anodisable, ce métal étant le même que celui des anodes, et destinée à être connectée à l'anode et d'une seconde zone (12) constituée par un métal présentant une bonne soudabilité.

2. Bande de connexion selon la revendication 1, caractérisée en ce que lesdites première et seconde zones sont de natures différentes du reste de la bande de connexion.

3. Bande de connexion selon la revendication 1, caractérisée en ce que ladite seconde zone (12) est de même nature que le reste de la bande de connexion.

4. Bande de connexion selon la revendication 1, caractérisée en ce que ladite première zone (13) est de même nature que le reste de la bande de connexion.

5. Bande de connexion selon la revendication 4, caractérisée en ce que la bande de connexion est en aluminium, ladite seconde zone (12) étant constituée d'un dépôt de cuivre recouvert d'un dépôt d'étain.

6. Bande de connexlon selon l'une quelconque des revendications 1 à 5, caractérisée en ce que le bord (15) de chaque languette est pourvu d'au moins une patte repliée destinée à venir en contact avec l'anode.

7. Procédé de fabrication de condensateurs électrolytiques à partir d'anodes réalisées en un métal anodisable, ledit procédé comprennant les étapes suivantes :
- soudure des anodes sur une bande de connexion (10) comportant des languettes (11) en des zones (13) des languettes constituées par un métal identique à celui des anodes (2),
- formation (oxydation) des anodes,
- imprégnation des anodes oxydées,
- mise en place des cathodes,
- exécution des opérations de finition des condensateurs, comprenant entre autres la réalisation d'électrodes d'anodes à partir de zones (12) des languettes (11) constituées par un métal présentant une bonne soudabilité.

## Patentansprüche

1. Anschlußband (10) für Anoden (2) von Elektrolytkondensatoren zur Oberflächenbestückung, wobei das Band Zungen (11) zum Anschluß der Anoden besitzt, dadurch gekennzeichnet, daß jede Zunge eine erste zum Anschluß an die Anode bestimmte Zone (13) aus einem anodisierbaren Metall, das dem der Anode gleicht, und eine zweite Zone (12) besitzt, die aus einem gut löt- oder schweißbaren Metall besteht.

2. Anschlußband nach Anspruch 1, dadurch gekennzeichnet, daß die erste Zone und die zweite Zone sich nach ihrer Art vom übrigen Anschlußband unterscheiden.

3. Anschlußband nach Anspruch 1, dadurch gekennzeichnet, daß die zweite Zone (12) nach ihrer Art dem Rest des Anschlußbandes gleicht.

4. Anschlußband nach Anspruch 1, dadurch gekennzeichnet, daß die erste Zone (13) nach ihrer Art dem Rest des Anschlußbandes gleicht.

5. Anschlußband nach Anspruch 4, dadurch gekennzeichnet, daß das Anschlußband aus Aluminium ist, während die zweite Zone (12) aus einer mit einer Zinnschicht bedeckten Kupferschicht besteht.

6. Anschlußband nach einem beliebigen der Ansprüche 1 bis 5, dadurch gekennzeichnet, daß der Rand (15) jeder Zunge mindestens eine umgebogene Lasche besitzt, die mit der Anode in Kontakt kommen soll.

7. Verfahren zur Herstellung von Elektrolytkondensatoren mithilfe von aus einem anodisierbaren Metall gebildeten Anoden, wobei das Verfahren die folgenden Schritte aufweist:
- die Anoden werden an ein Anschlußband (10) mit Zungen (11) in Zungenzonen (13) angelötet oder angeschweißt, die von einem Metall gleich dem der Anoden (2) gebildet werden,
- die Anoden werden durch Oxydation gebildet,
- die oxidierten Anoden werden imprägniert,
- die Kathoden werden eingesetzt,
- die Verfahrensschritte der Fertigstellung der Kondensatoren werden durchgeführt, zu denen unter anderen die Herstellung der Anodenelektroden ausgehend von Zonen (12) der Zungen (11) gehört, die aus einem gut schweiß- oder lötbaren Metall bestehen.

## Claims

1. A connection strip (10) for anodes (2) of electrolytical capacitors of the surface mounted type, said strip comprising tongues (11) for connecting the anode, characterized in that each tongue is provided with a first zone (13) made of an anodizable metal which is identical to that of the anodes and conceived to be connected to the anode, and a second zone (12) constituted by a metal having good soldering or welding properties.

2. A connection strip according to claim 1, characterized in that said first and second zones are of different kind with respect to the remaining connection strip.

3. A connection strip according to claim 1, characterized in that said second zone (12) is of the same kind as the remaining connection strip.

4. A connection strip according to claim 1, characterized in that said first zone (13) is of the same kind as the remaining connection strip.

5. A connection strip according to claim 1, characterized in that the connection strip is made of aluminum, said second zone (12) being constituted by a copper layer covered with a tin layer.

6. A connection strip according to any one of the preceding claims, characterized in that the edge (15) of each tongue is provided with at least one folded flap intended to come into contact with the anode.

7. A method for manufacturing electrolytical capacitors having anodes made of an anodizable metal, said method comprising the following steps:
- the anodes are welded to a connection strip (10) having tongues (11) in tongue zones (13) made of the same metal as the anodes (2),
- the anodes are formed by oxidation,
- the oxidized anodes are impregnated,
- the cathodes are mounted,
- the final manufacturing steps are performed, which include among others the realization of anode electrodes from tongue zones (12) constituted by a metal having good welding or soldering properties.
